# EUROPÄISCHE PATENTSCHRIFT

(11) **EP 2 507 662 B1**
(45) Veröffentlichungstag und Bekanntmachung des Hinweises auf die Patenterteilung: **11.04.2018**
(21) Anmeldenummer: 10787721.9
(22) Anmeldetag: 24.11.2010
(51) Int. Cl.: G02B 13/00, G02B 13/26, G02B 21/00, G02B 3/00

(54) **VORRICHTUNG ZUR OPTISCHEN ABBILDUNG**
DEVICE FOR OPTICAL IMAGING
DISPOSITIF DE REPRODUCTION OPTIQUE

(30) Priorität: 01.12.2009 DE 102009047361
(43) Veröffentlichungstag der Anmeldung: 10.10.2012
(73) Patentinhaber: Fraunhofer-Gesellschaft zur Förderung der angewandten Forschung e.V., 80686 München (DE)
(72) Erfinder: DUPARRE, Jacques, 07745 Jena (DE); WIPPERMANN, Frank, 98617 Meiningen (DE); BRÜCKNER, Andreas, 07743 Jena (DE); BRÄUER, Andreas, 07646 Schlöben (DE); LEITEL, Robert, 07743 Jena (DE); VÖLKEL, Reinhard, CH-2000 Neuchatel (CH)
(74) Vertreter: Zimmermann, Tankred Klaus
(86) Internationale Anmeldenummer: PCT/EP2010/068159
(87) Internationale Veröffentlichungsnummer: WO 2011/067150

(56) Entgegenhaltungen:
- GB-A- 1 248 362
- US-A- 3 584 952
- US-A1- 2008 007 623
- US-B1- 6 381 072

## Beschreibung

Die vorliegende Erfindung bezieht sich auf eine Vorrichtung zur optischen Abbildung eines Objektes auf einen digitalen Bildsensor, welche beispielsweise in der digitalen Mikroskopie bzw. der Makrophotographie zum Einsatz kommen kann. US 3,584,952 beschreibt eine Vorrichtung zur optischen Abbildung gemäß dem Stand der Technik. Klassische Mikroskope mit einer rein optischen Vergrößerung benötigen einen großen optischen Hebel zur Erzielung großer Bildweiten bei kurzen Objektabständen. Diese sogenannten großen optischen Hebel resultieren in großen Tubuslängen und damit großen Baulängen der Mikroskope. Bekannte, konventionelle Mikroskopaufbauten können Höhen im Bereich von 25 bis 50 cm aufweisen. Mit einer wachsenden Vergrößerung sinkt bei den klassischen Mikroskopen das beobachtbare Objektfeld. Klassische Mikroskope sind nach wie vor aufwändig korrigierte optisch-mechanische Präzisionsinstrumente und damit teuer in der Herstellung.

Neue digitale Bildsensoren erlauben aufgrund ihrer kleinen Pixelgrößen nun erstmals die Aufnahme kleiner Objektdetails, abhängig von der Pixelgröße bei einer optischen 1 : 1 Abbildung, also Bildfeld = Objektfeld oder einer nur sehr geringen optischen Vergrößerung, diese Technik wird als digitale Makrophotographie bezeichnet. Ein Nachteil dieser Technik ist, dass bei einer Reduzierung der Baulänge eines entsprechenden Objektivs bei großer Objektausdehnung ein schiefer Durchgang des Lichts am Bildfeldrand durch das Makroobjektiv bzw. den einen Linsenkanal entsteht und damit extrem starke Aberrationen am Bildfeldrand (sog. Off-Axis-Aberrationen) entstehen, wodurch die Bildqualität stark beeinflusst wird oder eine aufwändige Korrektur notwendig wird.

Zur Erreichung geringer Bauhöhen digitaler Abbildungssysteme existiert weiterhin ein Konzept der Nutzung mehrerer optischer Kanäle. Dieser sog. Feldansatz bzw. Arrayansatz ermöglicht eine parallele Übertragung benachbarter Objektteile in benachbarte Bildteile durch periodisch nebeneinander angeordnete, identische und sich einander nicht oder nur wenig beeinflussende Objektive bzw. Abbildungskanäle. Dadurch geschieht die Bildübertragung im Wesentlichen wieder senkrecht (bis auf die geringen Feldwinkel innerhalb der einzelnen Kanäle), das heißt es entsteht im Gegensatz zu Ein-Kanal-Varianten kein schiefer Durchgang des Lichts am Bildfeldrand, wobei das Objektfeld mit der Bildsensorgröße bzw. der Zahl der verwendeten Kanäle skaliert und die Baulänge davon unabhängig ist. Ein Nachteil dieses Feldansatzes ist, dass aufgrund der Feldgeometrie der Anordnung unter Umständen Artefakte im Bild resultieren können. Diese Artefakte können sich beispielsweise in einer Modulation der Auflösung, Helligkeit oder auch der Vergrößerung abhängig von der Periode des Feldes widerspiegeln. Ein weiteres Problem ist, das optische Übersprechen zwischen den verschiedenen Kanälen, dessen Verhinderung kritisch ist. Aufgrund der Nutzung mehrerer Kanäle werden sowohl das Objektfeld, als auch das Bildfeld in mehrere, entsprechend der Anzahl der Kanäle Teilobjektfelder und Teilbildfelder aufgeteilt. Dazu existieren bei dem beschriebenen Feldansatz verschiedene Varianten der Kombination von Objektfeldanschluss und Bildfeldanschluss, also des Zusammensetzens der Teilobjektfelder und Teilbildfelder.

Weiterhin unterscheiden sich Varianten, bei denen mehrere Kanäle zur Entstehung eines Bildpunktes beitragen, welche damit eine höhere Lichtstärke aufweisen, zu Varianten, bei denen nur ein Kanal zur Entstehung eines Bildpunktes beiträgt, welche eine höhere Auflösung aufweisen.

Zusammenfassend lässt sich sagen, dass im bekannten Stand der Technik kein Konzept existiert, welches eine Abbildung lateral ausgedehnter naher Objekte, also mit einem geringen Abstand des Objekts zu einem Abbildungssystem, bei einer hohen Bildqualität mit einer geringen Bauhöhe des Abbildungssystems vereint.

Eine Aufgabe der vorliegenden Erfindung ist es damit, ein Konzept zu schaffen, welches eine Abbildung lateral ausgedehnter naher Objekte mit einem besseren Verhältnis von Bildqualität zu Bauhöhe ermöglicht.

Eine Vorrichtung gemäß Anspruch 1 löst diese Aufgabe.

Der Kerngedanke der vorliegenden Erfindung besteht darin, dass bei einer Vorrichtung zur optischen Abbildung zumindest eines Teils eines Objekts auf einen Bildbereich eines digitalen Bildsensors, die einen optischen Kanal mit zwei abbildenden Linsen und einer Feldlinse aufweist, ein besseres Verhältnis von Bildqualität zu Bauhöhe erzielt werden kann, wenn die Feldlinse so zwischen der ersten abbildenden Linse und der zweiten abbildenden Linse angeordnet ist, dass eine senkrecht zur lateralen Ausdehnung des optischen Kanals durch einen lateralen Mittelpunkt der Feldlinse verlaufende Achse eine Symmetrieachse des optischen Kanals bildet. Die zwei abbildenden Linsen sind damit in ihrer Form, aber vor allem in ihren optischen Eigenschaften identisch oder weichen nur geringfügig, beispielsweise innerhalb der Fertigungstoleranzen voneinander ab. Eine dem Objekt zugewandte erste Oberfläche der ersten abbildenden Linse bildet damit eine Lichteintrittsfläche des optischen Kanals, und eine dem Bildsensor zugewandte erste Oberfläche der zweiten abbildenden Linse bildet damit eine Lichtaustrittsfläche des optischen Kanals. Die laterale Ausdehnung des optischen Kanals verläuft damit entlang einer Achse durch den Mittelpunkt der Lichteintrittsfläche des optischen Kanals und den Mittelpunkt der Lichtaustrittsfläche des optischen Kanals, welche auch einen Hauptstrahl des optischen Kanals definiert.

Ein Vorteil der vorliegenden Erfindung ist damit, dass durch die symmetrische Anordnung des optischen Kanals eine 1 : 1 Abbildung eines Teils eines Objektes auf einen Bereich eines Bildsensors ermöglicht wird, was zu einem besseren Verhältnis von Bildqualität zu Bauhöhe der Vorrichtung führt. Der maximal erfassbare Objektbereich ist dann nicht mehr abhängig von der Bauhöhe der Vorrichtung, sondern von der Größe der optisch aktiven Fläche des Bildsensors und skaliert mit dieser.

Bei Ausführungsbeispielen der vorliegenden Erfindung, können mehrere optische Kanäle in einer hexagonalen Verteilung angeordnet sein, wobei sich die Erfassungsbereiche der optischen Kanäle beispielsweise in ihren Rändern teilweise überlappen können.

Ein weiterer Vorteil der vorliegenden Erfindung ist damit, dass durch die Abbildung nur eines Teils eines Objekts auf einen Bereich eines Bildsensors die maximal aufzunehmende Objektgröße nicht mit der Bauhöhe der Vorrichtung, sondern mit der Anzahl der verwendeten Kanäle skaliert. Eine Vergrößerung des zu erfassenden Objektbereiches führt damit zu einer erhöhten Anzahl optischer Kanäle und eventuell zu einer Vergrößerung der optisch aktiven Fläche des Bildsensors, aber nicht zu einer Erhöhung der lateralen Ausdehnung der optischen Kanäle bzw. einer Bauhöhenvergrößerung der Vorrichtung zur optischen Abbildung.

Bevorzugte Ausführungsbeispiele der vorliegenden Erfindung werden im Folgenden anhand der beiliegenden Zeichnungen näher erläutert. Es zeigen:
- Fig. 1a und Fig. 1b: schematische Darstellungen einer Vorrichtung zur optischen Abbildung gemäß einem Ausführungsbeispiel der vorliegenden Erfindung;
- Fig. 2a bis Fig. 2b: Schnittansichten einer abbildenden Linse zur Verwendung in einem Ausführungsbeispiel der vorliegenden Erfindung;
- Fig. 3a bis Fig. 3c: Schnittansichten einer Feldlinse zur Verwendung in einem Ausführungsbeispiel der vorliegenden Erfindung;
- Fig. 4: eine schematische Darstellung einer Vorrichtung zur optischen Abbildung gemäß einem Ausführungsbeispiel der vorliegenden Erfindung;

Bevor im Folgenden die vorliegende Erfindung anhand der Zeichnungen näher erläutert wird, wird darauf hingewiesen, dass gleiche Elemente in den Figuren mit den gleichen oder den ähnlichen Bezugszeichen versehen sind und dass eine wiederholte Beschreibung dieser Elemente weggelassen wird.

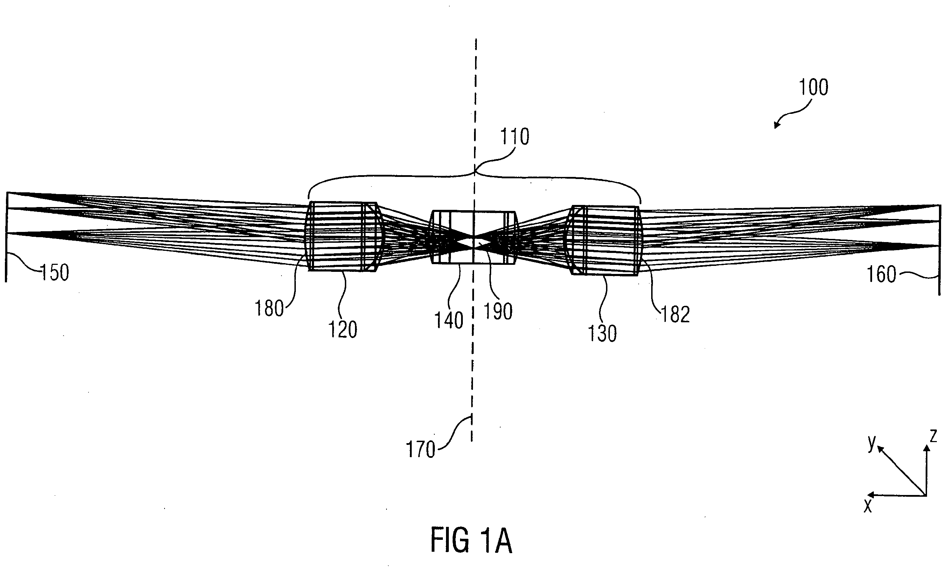

Fig. 1a zeigt eine schematische Darstellung einer Vorrichtung 100 zur optischen Abbildung gemäß einem Ausführungsbeispiel der vorliegenden Erfindung. Die schematische Darstellung zeigt eine Schnittansicht einer xz-Ebene der Vorrichtung 100. Die Ausdehnung in y-Richtung der Vorrichtung 100 ist hier nicht dargestellt. Die Vorrichtung 100 umfasst einen optischen Kanal 110. Der optische Kanal umfasst eine erste abbildende Linse 120 und eine zweite abbildende Linse 130, wobei die beiden abbildenden Linsen 120, 130 in ihrer Form und vor allem in ihrer optischen Funktionsweise identisch sind oder nur geringfügig innerhalb von Fertigungstoleranzen voneinander abweichen. Zwischen der ersten abbildenden Linse 120 und der zweiten abbildenden Linse 130 ist eine Feldlinse 140 mittig angeordnet. Ein von der Vorrichtung 100 abzubildendes Objekt kann sich beispielsweise in einer Objektebene 150 befinden. Die von der Vorrichtung 100 erzeugte Abbildung zumindest eines Teils des Objektes, welcher im Folgenden auch als abzubildender Objektbereich bezeichnet wird, in der Objektebene 150 kann sich beispielsweise in einer Bildebene 160 befinden. Die gesamte Vorrichtung 100 und damit auch der optische Kanal 110 sind symmetrisch um eine durch einen Mittelpunkt der Feldlinse 140 und senkrecht zur lateralen Ausdehnung in x-Richtung des optischen Kanals 110, in z-Richtung, verlaufende Symmetrieachse 170.

Von der Objektebene 150 einfallendes Licht trifft auf eine erste Oberfläche der ersten abbildenden Linse 120, welche auch eine Lichteintrittsfläche 180 des optischen Kanals 110 ist. Die erste abbildende Linse 120 fokussiert das einfallende Licht, so dass in einer Zwischenbildebene 190, welche parallel zur Objektebene 150 und zur Bildebene 160 in einer yz-Ebene liegt und durch den Mittelpunkt der Feldlinse 140, also den Mittelpunkt des optischen Kanals 110 und der Vorrichtung 100 verläuft, ein verkleinertes Zwischenbild des abzubildenden Objektbereichs entsteht. Das in der Zwischenbildebene 190 entstehende Zwischenbild steht im Gegensatz zu dem abzubildenden Objektbereich kopfüber und ist seitenverkehrt. Eine starke Zwischenbildverkleinerung im Vergleich zu dem abzubildenden Objektbereich ist bevorzugt, da dies die Nutzung von Blenden mit geringem Blendendurchmesser ermöglicht, was zu einer effektiven Unterdrückung von Geisterlicht führen kann. Aufgrund der symmetrischen Anordnung der Vorrichtung 100 bzw. des optischen Kanals 110 um die Symmetrieachse 170, ist der Strahlengang des einfallenden Lichtes von der Objektebene 150 zur Zwischenbildebene 190 gespiegelt zu dem Strahlengang des Lichtes von der Zwischenbildebene 190 zur Bildebene 160. Das von der Zwischenbildebene 190 ausgehende Licht trifft auf die zweite abbildende Linse 130 und wird von einer ersten Oberfläche der abbildenden Linse 130, welche auch eine Lichtaustrittsfläche 182 des optischen Kanals 110 ist, auf die Bildebene 160 gestreut. Die Abmessungen des erfassten Bildbereichs sind aufgrund der Symmetrie der Vorrichtung 100 bzw. des optischen Kanals 110 identisch den Abmessungen des abgebildeten Objektbereichs. Mit anderen Worten wird eine 1 : 1 Abbildung erreicht. In der Bildebene 160 kann beispielsweise ein digitaler Bildsensor angeordnet sein. Aufgrund der Symmetrie der Vorrichtung 100 bzw. des optischen Kanals 110 und der daraus resultierenden 1 : 1 Abbildung entsprechen die Abmessungen der photoaktiven Fläche des Bildsensors gleich den Abmessungen der maximal erfassbaren Fläche des Objektbereichs. Der optische Kanal 110 kann dabei beispielsweise einen Teil eines zu erfassenden Objekts in der Objektebene 150 auf einen Bereich des Bildsensors abbilden.

In weiteren Ausführungsbeispielen könnte die Vorrichtung 100 zusätzlich weitere optische Kanäle 110 aufweisen, welche identisch sind oder innerhalb von Fertigungstoleranzen geringfügig voneinander abweichen. Die optischen Kanäle 110 könnten beispielsweise in einer hexagonalen Verteilung angeordnet sein und könnten sich in ihren Erfassungsbereichen teilweise überlappen. Die Größe des erfassten Objektbereichs skaliert dann nicht mit der lateralen Ausdehnung der Vorrichtung 100, sondern mit der Anzahl der verwendeten optischen Kanäle und ist maximal begrenzt durch die optisch aktive Fläche des Bildsensors. Um ein größeres Objektfeld abzubilden, könnten bei weiteren Ausführungsbeispielen der Erfindung in der Bildebene 160 mehrere miteinander elektrisch verschaltete Bildsensoren angeordnet sein. Dies hat keinen Einfluss auf die laterale Ausdehnung der Vorrichtung 100, also auf die Bauhöhe, welche konstant gering gehalten werden kann.

Ausführungsbeispiele der Erfindung ermöglichen damit eine Abbildung lateral ausgedehnter naher Objekte, beispielsweise mit einem Abstand von einer Objektebene 150 zu einer Lichteintrittsfläche 180 eines optischen Kanals 110 von weniger als 10mm, mit einem besseren Verhältnis von Bildqualität zu Bauhöhe gegenüber bereits bekannten Abbildungssystemen.

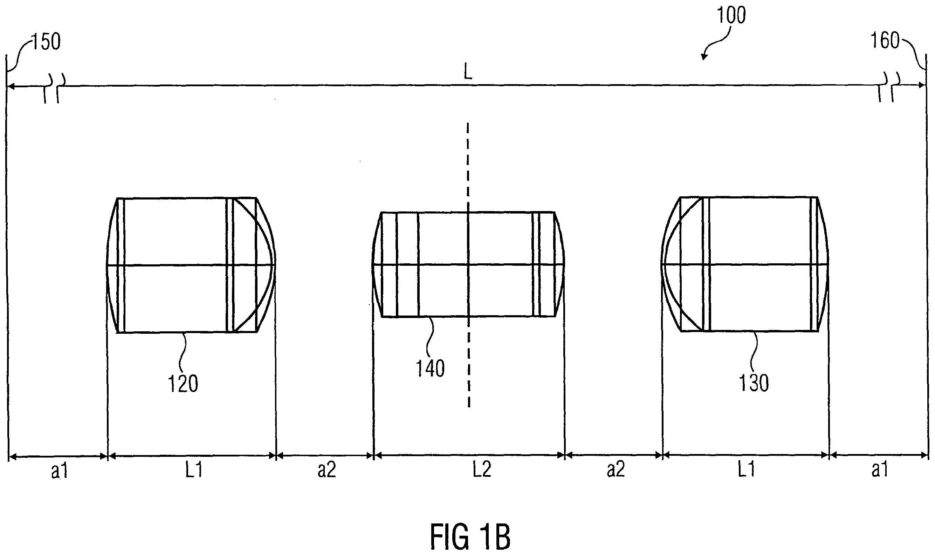

Fig. 1b zeigt beispielhaft Werte für die einzelnen Abstände in x-Richtung zwischen den Linsen, sowie zwischen der Bild- und Objektebene, wie sie beispielsweise bei der in Fig. 1a gezeigten Vorrichtung 100 verwendet werden können. Weiterhin wird die Symmetrie der Vorrichtung 100 erneut verdeutlicht. Die in Fig. 1b gezeigten Werte sollen lediglich als beispielhafte Werte dienen, natürlich sind hier auch andere Werte, unter Beachtung der Symmetrie der Vorrichtung 100 um die Symmetrieachse 170 möglich. Es sei hier nochmals erwähnt, dass bei der in Fig. 1b gezeigten Vorrichtung 100 eine Vergrößerung des zu betrachtenden Objektfeldes in der Objektebene 150 durch eine Erhöhung der Anzahl der optischen Kanäle 110 und eine Vergrößerung der optisch aktiven Fläche eines in der Bildebene 160 befindlichen Bildsensors herbeigeführt werden kann, dabei aber die laterale Ausdehnung der Vorrichtung 100 in x-Richtung L (in Fig. 1b ist L rund 3,9 mm) konstant gehalten werden kann. Indem in Fig. 1b gezeigten konkreten Ausführungsbeispiel beträgt der Abstand a1 von der Objektebene 150 zu der Lichteintrittsfläche 180 des optischen Kanals 110, welche auch die erste Oberfläche der ersten abbildenden Linse 120 ist, 1303 µm. Die erste abbildende Linse 120 weist eine laterale Abmessung L1 von 340,9 µm auf, welche identisch der lateralen Abmessung L1 der zweiten abbildenden Linse 130 ist. Eine zweite Oberfläche der ersten abbildenden Linse 120 ist mit 198,7 µm (a2) von einer ersten Oberfläche der Feldlinie 140 beabstandet. Die Feldlinie 140 weist eine laterale Abmessung L2 von 381,4 µm auf, wobei durch die Mitte der Feldlinse 140 die Symmetrieachse 170 des optischen Kanals 110 bzw. der Vorrichtung 100 verläuft. Die zweite abbildende Linse 130 ist 198,7 µm (a2) von der Feldlinse 140 beabstandet. Der Abstand a1 zwischen der Bildebene 160 und der Lichtaustrittsfläche 182 des optischen Kanals 110 beträgt im konkreten Ausführungsbeispiel 1303 µm.

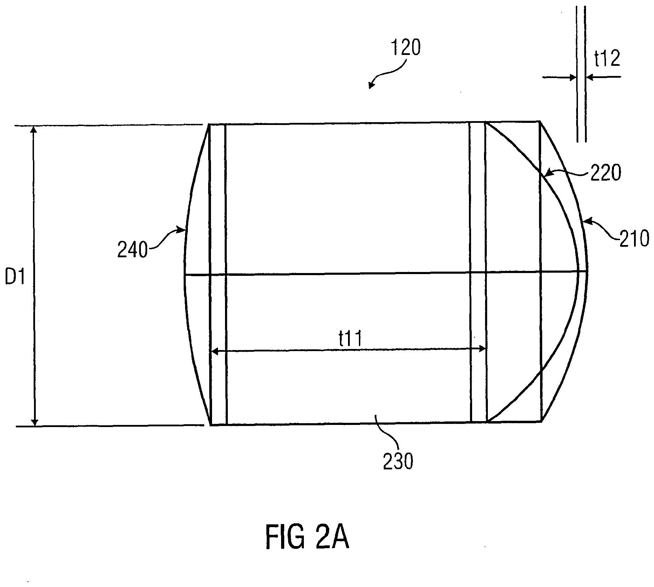

Die Figuren 2a-2b zeigen Schnittansichten einer abbildenden Linse zur Verwendung in einem Ausführungsbeispiel der vorliegenden Erfindung, welche beispielsweise eine der beiden abbildenden Linsen 120,130, in der in Fig. 1a gezeigten Vorrichtung 100 sein könnte. Da die beiden abbildenden Linsen 120 und 130 identisch sind, wird im Folgenden nur die erste abbildende Linse 120, stellvertretend für die zweite abbildende Linse 130 beschrieben.

Die in Fig. 2a gezeigte abbildende Linse 120 weist eine erste Linsenoberfläche 210 mit einer konvexen Wölbung auf. Die erste Linsenoberfläche 210 bildet damit die in dem vorherigen Ausführungsbeispiel beschriebene zweite Oberfläche der ersten abbildenden Linse 120. Indem in Fig. 2a gezeigten konkreten Ausführungsbeispiel weist die erste Linsenoberfläche 210 einen Radius von 241,3 µm, einen k-Parameter (Konik) von 0, eine Pfeilhöhe von 38.0 µm und einen Basisparameter von 43,9 µm auf. Angrenzend an die erste Linsenoberfläche 210 ist eine zweite Linsenoberfläche 220 mit einer konvexen Wölbung angeordnet. Indem in Fig. 2a gezeigten konkreten Ausführungsbeispiel weist die zweite Linsenoberfläche 220 einen Radius von 152,5 µm, einen k-Parameter (Konik) von 0, eine Pfeilhöhe von 72,8 µm und einen Basisparameter von 14,3 µm auf. Angrenzend an die zweite Linsenoberfläche 220 ist ein Linsenkörper 230 angeordnet. In dem in Fig. 2a gezeigten konkreten Ausführungsbeispiel weist der Linsenkörper 230 eine laterale Ausdehnung t11 von 228.2 µm auf. Angrenzend an den Linsenkörper 230 ist eine dritte Linsenoberfläche 240 angeordnet, bei welcher eine konvexe Wölbung entgegengesetzt der konvexen Wölbung der ersten Linsenoberfläche 210 und der zweiten Linsenoberfläche 220 ausgebildet ist. Die dritte Linsenoberfläche 240 bildet damit bei dem in den Fig.1a und 1b gezeigten Ausführungsbeispiel die erste Oberfläche der ersten abbildenden Linse 120 und damit die Lichteintrittsfläche 180 des optischen Kanals 110 und weiterhin die erste Oberfläche der zweiten abbildenden Linse 130 und damit die Lichtaustrittsfläche 182 des optischen Kanals 110.

Indem in Fig. 2a gezeigten konkreten Ausführungsbeispiel weist die dritte Linsenoberfläche 240 einen Radius von 343,2 µm, einen k-Parameter (Konik) von -8,28, eine Pfeilhöhe von 20,3 µm und einen Basisparameter von 14,5 µm auf. Die abbildende Linse 120 kann bevorzugt ein zylindrischer Körper sein, welcher indem in Fig. 2a gezeigten konkreten Ausführungsbeispiel einen Durchmesser R von 260 µm aufweist.

Indem in Fig. 2a gezeigten konkreten Ausführungsbeispiel der Linse 120 ist die erste Linsenoberfläche 210 aus einem Polymermaterial mit hohem Brechungsindex (n = 1.63 bei einer Wellenlänge von 588 nm) und niedriger Abbezahl (V=26 bei einer Wellenlänge von 588 nm) die zweite Linsenoberfläche 220 aus einem Polymermaterial mit niedrigem Brechungsindex (n = 1.52 bei einer Wellenlänge von 588 nm) und hoher Abbezahl (V=52 bei einer Wellenlänge von 588 nm), der Linsenkörper 230 aus einem Glasmaterial mit einem Brechungsindex von n = 1.52 und einer Abbezahl von V=56 (bei einer Wellenlänge von 588 nm) und die dritte Linsenoberfläche 240 aus einem Polymermaterial mit niedrigem Brechungsindex (n = 1.52 bei einer Wellenlänge von 588 nm), und hoher Abbezahl (V=52 bei einer Wellenlänge von 588 nm). Die beiden übereinander angeordneten Linsenoberflächen 210 und 220 bilden aufgrund der Verwendung zweier verschiedener Materialien mit verschiedenen Dispersionseigenschaften eine achromatische Linse, welche eine Korrektur des Farblängsfehlers ermöglicht.

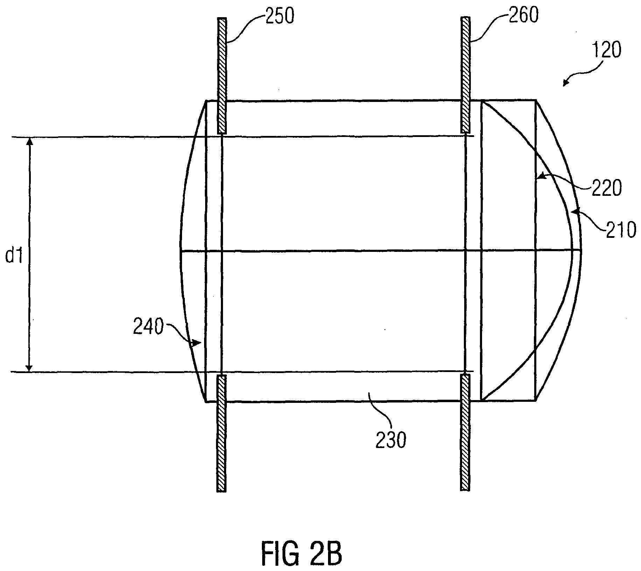

Fig. 2b zeigt eine mögliche Blendenanordnung für die in Fig. 2a beschriebene abbildende Linse 120. Die in Fig.2b gezeigte Blendenanordnung umfasst eine erste Blende 260, welche in einem Abstand t12 (vgl. Fig. 2a) von 9.1µm von der zweiten Linsenoberfläche 220 beabstandet ist und in dem Linsenkörper 320 angeordnet ist, sowie eine zweite Blende 250, welche in einem Abstand t12 (vgl. Fig. 2a) von 9.1µm von der dritten Linsenoberfläche 240 beabstandet ist und in dem Linsenkörper 320 angeordnet ist. Die beiden Blenden 250 und 260 sind in ihren Abmessungen identisch. In dem in Fig. 2b gezeigten konkreten Ausführungsbeispiel weisen die beiden Blenden 250 und 260 einen Öffnungsdurchmesser d1 von 232 µm auf.

Die Blenden 250, 260 können beispielsweise zur Unterdrückung von Falschlicht in einem optischen Kanals 110 in welchem die abbildende Linse 120 verwendet wird, dienen.

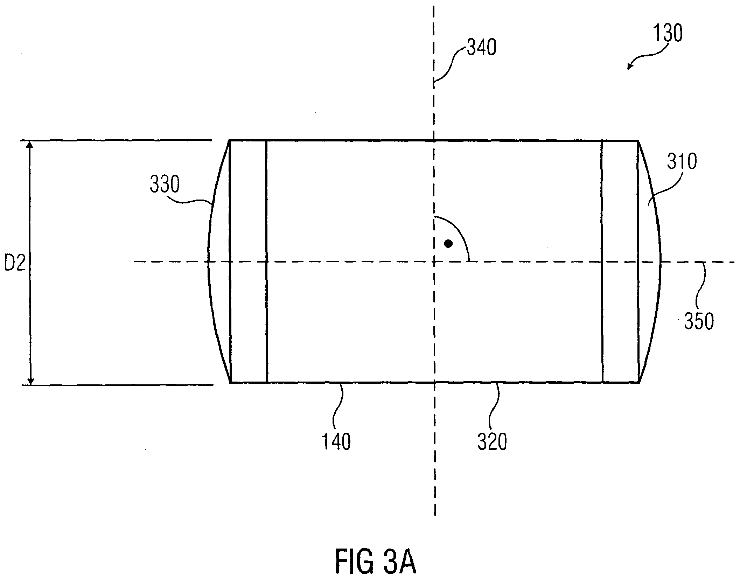

Die Figuren 3a bis 3c zeigen Schnittansichten einer Feldlinse 140 zur Verwendung in einem Ausführungsbeispiel der vorliegenden Erfindung, welche beispielsweise die Feldlinse 140 in der in Fig. 1a beschriebenen Vorrichtung 100 sein könnte.

Die in Fig. 3a gezeigte Feldlinse 140 weist eine erste Linsenoberfläche 310 mit einer konvexen Wölbung auf. Angrenzend an die erste Linsenoberfläche 310 ist ein Linsenkörper 320 angeordnet. Angrenzend an den Linsenkörper 320 ist eine zweite Linsenoberfläche 330 angeordnet, welche identisch zu der ersten Linsenoberfläche 310 ist und eine, der konvexen Wölbung der ersten Linsenoberfläche 310 entgegengesetzte konvexe Wölbung aufweist. Die erste Linsenoberfläche 310 und die zweite Linsenoberfläche 330 weisen in dem in Fig. 3a gezeigten konkreten Ausführungsbeispiel einen Radius von 270,9 µm, einen k-Parameter (Konik) von 0, eine Pfeilhöhe von 19,1 µm und einen Basisparameter von 30,1 µm auf. Die Feldlinse 140 ist bevorzugt ein zylindrischer Körper, welcher in dem in Fig. 3a gezeigten konkreten Ausführungsbeispiel einen Durchmesser D2 von 200 µm aufweist. Die Feldlinse 140 ist symmetrisch um eine Symmetrieachse 340, in z-Richtung welche durch einen lateralen Mittelpunkt der Feldlinse 140 verläuft und senkrecht zu einer Rotationsachse 350 in x-Richtung durch den lateralen Mittelpunkt der Feldlinse 140 steht.

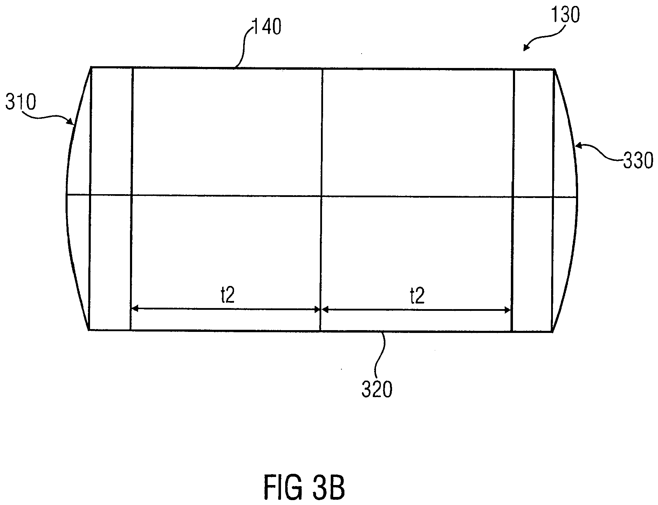

Fig. 3b zeigt die in Fig. 3a beschriebene Feldlinse 140. Indem in Fig. 3b gezeigten konkreten Ausführungsbeispiel der Feldlinse 140 sind die erste Linsenoberfläche 310 und die zweite Linsenoberfläche 330 aus einem Polymermaterial mit niedrigem Brechungsindex (n = 1.52 bei einer Wellenlänge von 588 nm) und hoher Abbezahl (V=52 bei einer Wellenlänge von 588 nm) und der Linsenkörper 320 aus einem Glasmaterial mit einem Brechungsindex von n = 1.52 und einer Abbezahl von V=56 (bei einer Wellenlänge von 588 nm) hergestellt.

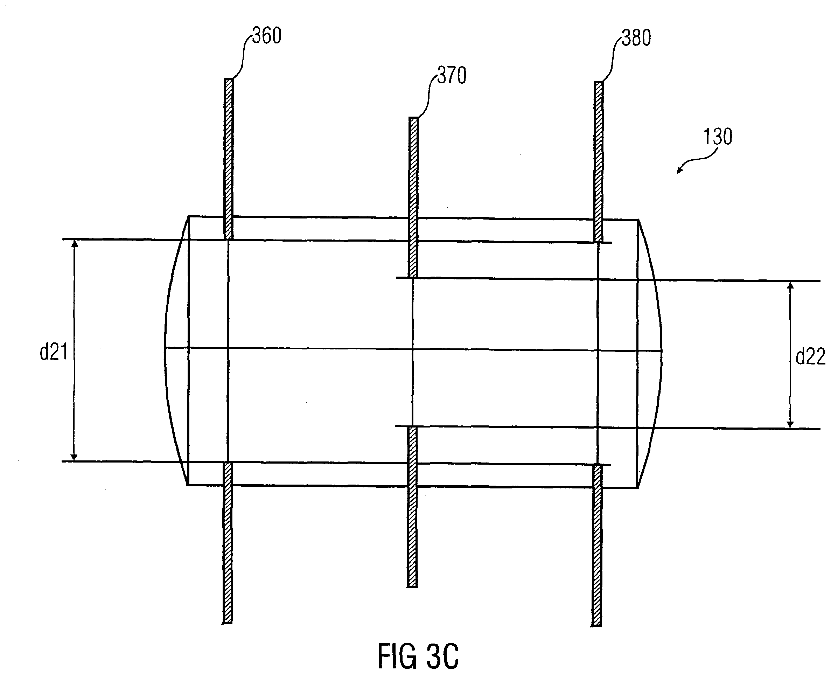

Fig. 3c zeigt die in den Fig. 3a und 3b beschriebene Feldlinse 140 mit einer Blendenanordnung, beispielsweise zur Bestimmung der Apertur eines optischen Kanals 110, in welchem die Feldlinse 140 verwendet wird. Die Blendenanordnung umfasst eine erste Blende 360, eine zweite Blende 370 und eine dritte Blende 380. Aufgrund der Symmetrie der Feldlinse 140 sind die erste Blende 360 und die dritte Blende 380 in demselben Abstand t2 von 145 µm von der Symmetrieachse 340 in dem Linsenkörper 320 und angrenzend an die erste Linsenoberfläche 310 und in dem Linsenkörper 320 und angrenzend an die zweite Linsenoberfläche 330 angeordnet. Die zweite Blende 370 ist in der lateralen Mitte der Feldlinse 140 angeordnet, verläuft also auf der Symmetrieachse 340. Die zweite Blende 370, kann bei einer Verwendung der Feldlinse 140 in einem Ausführungsbeispiel der vorliegenden Erfindung die maximale Zwischenbildgröße eines optischen Kanals 110 bestimmen. Indem in Fig. 3c gezeigten konkreten Ausführungsbeispiel der Feldlinse 140 weisen die erste Blende 360 und die dritte Blende 380 einen Öffnungsdurchmesser d21 von 144 µm auf. Die dritte Blende 370, welche beispielsweise die Apertur der Feldlinse 140 vorgibt, weist bevorzugt eine hexagonale Öffnung auf. Der Außenkreisdurchmesser d22 der Öffnung der Blende 370 kann in dem in der Fig. 3c gezeigten konkreten Ausführungsbeispiel beispielsweise 84,5 µm, 83,5 µm oder 85,5 µm betragen. Die Blende 370 kann bei einer Verwendung der Feldlinse 140 in einer Vorrichtung gemäß einem Ausführungsbeispiel beispielsweise eine Feldblende bzw. eine Aperturblende des optischen Kanals 110 darstellen, in welchem sie verwendet wird und kann damit den erfassten Bereich des Objektfeldes des optischen Kanals 110 definieren.

Die erste Blende 360 und die dritte Blende 380 könnten in dem in Fig. 3c gezeigten konkreten Ausführungsbeispiel beispielsweise aus einem schwarzen, absorbierenden PolymerMaterial gebildet sein.

Die zweite Blende 370 könnte in dem in Fig. 3c gezeigten Ausführungsbeispiel beispielsweise aus Metall gebildet sein.

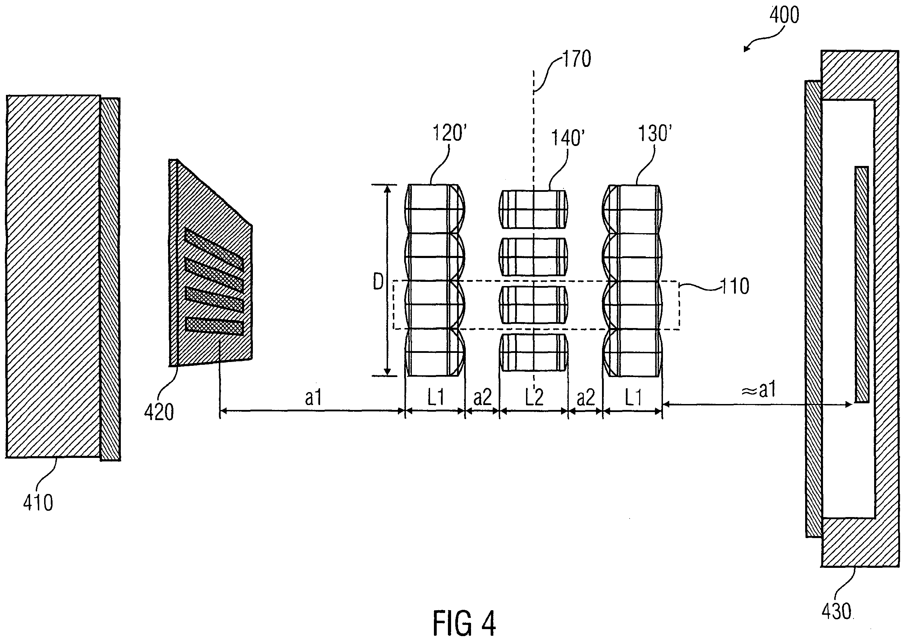

Fig. 4a zeigt eine Vorrichtung 400 gemäß einem Ausführungsbeispiel der vorliegenden Erfindung. Die Vorrichtung 400 umfasst eine Beleuchtungseinrichtung 410, beispielsweise eine LED-Hintergrundbeleuchtung. Angrenzend an eine lichtemittierende Oberfläche der Beleuchtungseinrichtung 410 ist ein Testmuster 420 angeordnet. In einem Abstand a1 von 1,3 mm grenzt an das Testmuster ein Mikrolinsenfeld 120' an. Das Mikrolinsenfeld 120' umfasst eine Mehrzahl von ersten abbildenden Linsen 120, beispielsweise wie sie in den Fig. 2a bis 2b beschrieben wurde. In einem Abstand a2 von ca. 200 µm zu dem ersten Mikrolinsenfeld 120' ist ein zweites Mikrolinsenfeld 140' angeordnet. Das zweite Mikrolinsenfeld 140' umfasst eine Mehrzahl von Feldlinsen 140, wie sie beispielsweise in den Fig. 3a bis 3c beschrieben wurde. In einem Abstand a2 von ca. 200 µm zu dem zweiten Mikrolinsenfeld 140' ist ein drittes Mikrolinsenfeld 130' angeordnet. Das dritte Mikrolinsenfeld 130' umfasst eine Mehrzahl zweiter abbildender Linsen 130, wie sie beispielsweise in den Fig. 2a bis 2b beschrieben wurde. Das Mikrolinsenfeld 130' ist damit identisch dem Mikrolinsenfeld 120', aber in seiner Orientierung in x-Richtung umgekehrt angeordnet. Angrenzend an das dritte Mikrolinsenfeld 130' ist ein digitaler Bildsensor 430 in einem Abstand a1 von ca. 1,3 mm zu dem dritten Mikrolinsenfeld 130' angeordnet. Der digitale Bildsensor 430 kann auf einer dem dritten Mikrolinsenfeld 130' zugewandten Oberfläche ein Deckglas zum Schutz des digitalen Bildsensors 430 aufweisen. Das erste Mikrolinsenfeld 120', das zweite Mikrolinsenfeld 140' und das dritte Mikrolinsenfeld 130' sind so angeordnet, dass eine abbildende Linse 120 des ersten Mikrolinsenfeldes 120' mit einer Feldlinse 140 des zweiten Mikrolinsenfeldes 140' und einer abbildenden Linse 130 des dritten Mikrolinsenfeldes 130' jeweils einen optischen Kanal 110 bilden. Die Vorrichtung 400 bzw. die optischen Kanäle 110 sind symmetrisch um eine Symmetrieachse 170 der Vorrichtung 400 bzw. der optischen Kanäle 110. Der Bildsensor 430 mit einer Ausdehnung von beispielsweise 6,55 mm x 4,92 mm gibt in Verbindung mit den optischen Kanälen 110 die Abmessungen des maximal abbildbaren Objektbereichs vor. Der Bildsensor 430 weist darüber hinaus einzelne Pixel mit einem Durchmesser von z.B. 3,2 µm auf, was damit dem kleinstmöglichen darstellbaren Detail des Objektfeldes entspricht. Aufgrund der Symmetrie der Vorrichtung 400 wird das Testmuster 420 oder, zumindest ein Teil dessen 1 : 1 auf den Bildsensor 430 abgebildet, das heißt es findet weder eine Vergrößerung noch eine Verkleinerung des Testmusters 420 statt. Die Beleuchtungsvorrichtung 410 dient der Ausleuchtung des Testmusters 420.

Es sei erwähnt, dass sämtliche in den vorherigen Ausführungsbeispielen genannten Längenmaße und Materialien, lediglich beispielhafte Werte und Materialien darstellen und daher keinesfalls einschränkend aufzufassen sind.

Aufgrund der Nutzung einer 1: 1 Abbildung bei Ausführungsbeispielen der vorliegenden Erfindung, welche eine Symmetrie zwischen Objekt und Bildraum erlaubt, kann die Optik bei Ausführungsbeispielen anders als sonst üblich, symmetrisch sein. Die absolute Symmetrie um die Zwischenbildebene wird im Design uneingeschränkt ausgenutzt und ist bevorzugt, unabhängig davon, wie die Verteilung der Linsen und Aperturen auf eventuelle Substrate und Luftabstände ist, wodurch eine intrinsische Korrektur von Koma, Verzeichnungen und Farbquerfehlern ermöglicht wird. Es sei erwähnt, dass eine intrinsische Korrektur bisher nur für die Symmetrie um die Systemapertur einer optischen Vorrichtung bekannt war. Ausführungsbeispiele der vorliegenden Erfindung allerdings können mit einer Symmetrie um die Zwischenbildebene ähnlich positive Effekte erzielen. Durch die Nutzung dünner Substrate kann ein geringer Astigmatismus erzielt werden.

Weitere Ausführungsbeispiele können zur Korrektur von sphärischen Abberationen Asphären umfassen. Das heißt, dass mindestens eine der beiden abbildenden Linsen oder die Feldlinse als eine asphärische Linse ausgebildet ist. Weiterhin kann durch die Kombination von Materialien unterschiedlicher Dispersionseigenschaften zur Realisierung von achromatischen Linsen, wie dies in den Fig. 2a bis b anhand der abbildenden Linse 120 gezeigt wurde, eine Korrektur des Farblängsfehlers erreicht werden.

Bei weiteren Ausführungsbeispielen der vorliegenden Erfindung können mehrere optische Kanäle in einer hexagonalen Anordnung mit hexagonaler Form der Feldblenden in der Zwischenbildebene angeordnet sein und so einen maximierten Füllfaktor und damit eine maximale Lichtstärke erreichen.

Durch die Nutzung zahlreicher Blenden und starker Zwischenbildverkleinerung bei weiteren Ausführungsbeispielen der vorliegenden Erfindung und damit kleiner Blendendurchmesser gegenüber dem Kanalabstand lässt sich eine effektive Unterdrückung von Geisterlicht erreichen.

Obwohl in den gezeigten Ausführungsbeispielen die Abstände der Linsen und Ebenen konstant und damit auch die laterale Ausdehnung der Ausführungsbeispiele konstant war, so können weitere Ausführungsbeispiele der Erfindung variable Abstände aufweisen. Dies kann beispielsweise durch eine Einführung von Aktorik in alle oder einige bestimmte Luftabstände erreicht werden. Mit anderen Worten gesagt, können die Abstände beispielsweise zwischen der Objektebene und der ersten abbildenden Linse, zwischen der ersten abbildenden Linse und der Feldlinse, zwischen der Feldlinse und der zweiten abbildenden Linse und zwischen der zweiten abbildenden Linse und der Bildebene variiert werden. Dies ermöglicht eine Aufnahme von Höhenprofilen bzw. topologischen Profilen (sogenannter "z-Scan"). Wenn F/# klein genug ist, gibt es nur einen eingeschränkten Schärfetiefenbereich, weshalb man aus der Aktorstellung Kenntnis hat, welcher Objektabstand gerade scharf abgebildet wird. Dies ermöglicht die Aufnahme eines 3D-Bildes, welches sich aus der 2D-lateralen Auflösung und der Info, in welcher Höhe sich diese Szene befindet, zusammensetzt. Um die Symmetrie der Vorrichtung zu erhalten, sollen bevorzugt gleichzeitig Objekt- und Bildabstand variiert werden, sowie die beiden Abstände der ersten und zweiten abbildenden Linse zur und von der Zwischenbildebene. Diese beiden Abstände sollen allerdings nur geringer und gemeinsam in die entgegengesetzte Richtung variiert werden, damit gleichzeitig die Abbildung scharf und der Objekt- bzw. Bildanschluss erhalten bleibt, mit anderen Worten gesagt, nicht nur eine Gesamtfokussierung, sondern auch die des Zwischenbildes soll erhalten bleiben. Ausführungsbeispiele der vorliegenden Erfindung können damit also 3D-Mikroskopie ermöglichen.

Eine Variation des Abstandes der Linsen bzw. Ebenen zueinander kann beispielsweise durch in den Lufträumen platzierte Piezo- oder MEMS-Elemente erreicht werden.

Eine Variante eines konkreten Ausführungsbeispiels, wie es in Fig. 4 gezeigt ist, mit der Verteilung der Linsen auf nur vier Substrate bzw. drei Elemente, kann den minimalen technischen Aufwand für den erreichten optischen Korrekturzustand darstellen, natürlich kann auch eine größere Zahl von Linsen bzw. Substraten unter Beachtung der Symmetrie der gesamten Vorrichtung bzw. der optischen Kanäle genutzt werden. Durch die Nutzung eines Feldansatzes, das heißt eine Nutzung von Mikrolinsenfeldern, wie es in Fig. 4 gezeigt wurde, und eine Waferlevel-Herstellungstechnologie lässt sich bei Ausführungsbeispielen der vorliegenden Erfindung eine nahezu beliebige laterale Skalierbarkeit erreichen.

Weiterhin lässt sich sagen, dass bei Ausführungsbeispielen mit einer Vielzahl optischer Kanäle um einen objekt- und bildweisen Anschluss zu erreichen, eine 1 : 1 Abbildung zu bevorzugen, ist.

Eine Verkleinerung wäre auch verwendbar, während bei einer Vergrößerung Objektdetails bei Abbildung durch die Mikrolinsenfelder verloren gingen, da ein Bild nicht größer als ein Kanalabstand sein kann, ohne Informationen zu verlieren, dies gilt insbesondere für den Fall, dass in der yz-Ebene, also senkrecht zum Strahlengang der Abbildungsvorrichtung nichts bewegt werden soll / kann, also kein Abtasten bzw. Scannen durchgeführt wird. Wird allerdings ein Abtasten in der yz-Ebene durchgeführt, so kann der abgebildete Objektbereich wiederum kleiner als der Kanalabstand sein.

Ausführungsbeispiele könnten daher ein Abtasten in der yz-Ebene ermöglichen, um einen Objektbereich, welcher kleiner als der Kanalabstand ist, abzutasten. Mit anderen Worten gesagt können bei Ausführungsbeispielen Abtastlücken durch eine Bewegung in der yz-Ebene vermieden werden.

Ein Ziel ist es daher, wenigstens einen Objektfeldanschluss zu erreichen, bestenfalls mit gleichzeitigem Bildfeldanschluss, was aber schwierig zu erfüllende Anforderungen an die Toleranzen der Herstellung und Montage stellt, da immer gleichzeitig innerhalb des Einzelkanals scharfe Abbildungen zu fordern sind.

Bei Ausführungsbeispielen der vorliegenden Erfindung ist es bevorzugt, wenn an den Bildanschlussstellen mehrerer optischer Kanäle nur geringste Bereiche existieren, wo zwei benachbarte Kanäle gleichzeitig beitragen, das heißt, dass die optischen Kanäle sich in ihren Erfassungsbereichen nur geringfügig überlappen. Falls ein Anschluss der einzelnen Objektfelder erzielt werden soll, kann eine Redundanz geduldet werden, da diese elektronisch verwertbar bzw. korrigierbar ist, solange keine Abtastlücken vorhanden sind bzw. keine Information aus dem Objektfeld fehlt.
Bei einer etwas verkleinerten Abbildung, also bei einem Nur-Objektfeldanschluss entstehen voneinander geometrisch isolierte Teilbilder, welche elektronisch zusammengesetzt werden können.

Bei Ausführungsbeispielen der vorliegenden Erfindung können verschiedene digitale Bildsensoren in der Bildebene angeordnet sein, wie beispielsweise CCD, CMOS, Bildsensoren oder auch Polymerphotodiodenfelder, welche tatsächlich flächig sind. Ausführungsbeispiele der vorliegenden Erfindung können sich in ihren Abmessungen auf einen kompletten Wafer, beispielsweise 4 Zoll, 6 Zoll oder 8 Zoll ausdehnen.

Die Nutzung von Polymerphotodiodenfeldern kann die Herstellung von Vorrichtungen gemäß Ausführungsbeispielen der vorliegenden Erfindung weiter reduzieren, da die Nutzung von CMOS und CCD derzeit noch Kostenprobleme bereitet. Die Größe der Bildfläche durch eine 1 : 1 Abbildung, ist daher langfristig unter Einsatz von Polymerphotodiodenfeldern kein Problem mehr.

Weitere Ausführungsbeispiele der vorliegenden Erfindung können beispielsweise eine Helligkeitskorrektur (sog. "shading-correction") durchführen, um Helligkeitsmodulationen als Artefakte der Feldgeometrie softwaremäßig, also beispielsweise per Tabelle (sog. "Lookup-Table") auszukalibrieren.

Weiterhin kann bei Ausführungsbeispielen eine Bewegung der Optik um wenigstens eine Kanalperiode oder auch bevorzugt mehrere, während der Belichtungszeit oder bevorzugt deutlich öfter genutzt werden, um Artefakte, die aus der Feldgeometrie der Anordnung resultieren, oder Kanaldefekte ohne Bildverarbeitung ("shading-correction") korrigieren zu können, oder Interferenzobjekte für Objektpunkte, die von zwei benachbarten Kanälen gleichzeitig übertragen werden, auszumitteln. Diese Bewegung kann beispielsweise durchgeführt werden mit Piezobiegern, Piezostacks, einem mechanisch übersetzten Piezostack, einer Spule oder auch einem elektrischen Aktor.

Bei Ausführungsbeispielen der vorliegenden Erfindung verwendete digitale Bildsensoren können bevorzugt eine Auflösung besser als 200...300 Linienpaare pro mm aufweisen, was einer Pixelgröße von 2,5...1,67 µm entspricht. Für diese Größen dominiert das Beugungslimit und nicht mehr die Pixelgröße oder optische Aberrationen das Auflösungsvermögen. Durch eine Verringerung der Blendenzahl (F/#) kann dieses sowie die Lichtstärke des Systems weiter verbessert werden, wobei allerdings der Anteil optischer Aberrationen überproportional wächst.

Ausführungsbeispiele der vorliegenden Erfindung zeichnen sich durch eine extrem geringe Baulängeaus. Beispielsweise kann der Abstand zwischen Objekt und Bild viel kleiner als 1 cm sein. Weiterhin skaliert die inspizierbare Objektfläche mit der Bildsensorfläche bzw. mit der Zahl der im optischen Feld verwendeten Kanäle, was zu einer Fläche von viel größer 1 cm² oder sogar größer 7 cm² führen kann. Weiterhin sind minimal inspizierte Objekte teils nur begrenzt durch die Pixelgröße des eingesetzten digitalen Bildsensors, welche beispielsweise viel kleiner als 5 µm oder sogar kleiner als 2 µm sein können, wodurch durch den konsequent abberationsminimierenden optischen Ansatz durch die Nutzung einer Vielzahl von optischen Kanälen, welcher in Ausführungsbeispielen der vorliegenden Erfindung angewendet werden kann, eine hohe Auflösung ermöglicht wird.

Die Nutzung von Polymeren bei Ausführungsbeispielen, wie beispielsweise die ORMOCER-auf-Glas-Technologie ermöglicht die Herstellung auf Basis von Reflow-Lötens und ist sehr gut geeignet für Blendenfelder auf den Glassubstraten und zur Überformung bereits abgeformter Strukturen zur Achromatisierung, wie es beispielsweise in den Fig. 2a bis 2b anhand der abbildenden Linse 120 beschrieben wurde.

Zumindest einige Ausführungsbeispiele der vorliegenden Erfindung können außerdem kostengünstig herstellbar sein, da sie im Waferlevel assemblierbar sind. Weiterhin ist zu erwähnen, dass Ausführungsbeispiele der vorliegenden Erfindung als Einheit in Feldern hergestellt werden können und nicht als einzelne laterale Komponenten, wodurch ein späteres aufwendiges Zusammensetzen der einzelnen Komponenten entfällt.

Ausführungsbeispiele können beispielsweise Verwendung finden in der digitalen Mikroskopie, in der Makrophotographie, in der Medizintechnikt oder auch in der Inkubatorüberwachung ("Inkubator-Monitoring"). Die Erfindung ist in den beigefügten Ansprüche definiert.

## Patentansprüche

1. Vorrichtung zur optischen Abbildung zumindest eines Teils eines Objekts auf einen Bereich eines digitalen Bildsensors, mit:
einem optischen Kanal (110) umfassend eine auf einem ersten Substrat angeordnete erste abbildende Linse (120), eine auf einem zweiten Substrat angeordnete zweite abbildende Linse (130) und eine auf einem dritten Substrat angeordnete Feldlinse (140);
wobei die erste abbildende Linse (120) und die zweite abbildende Linse (130) identisch sind;
wobei die erste abbildende Linse (120) und die zweite abbildende Linse (130) so angeordnet sind, dass eine erste Oberfläche (240) der ersten abbildenden Linse (120) eine Lichteintrittsfläche (180) des optischen Kanals (110) ist, und eine erste Oberfläche (240) der zweiten abbildenden Linse (130) eine Lichtaustrittsfläche (182) des optischen Kanals (110) ist;
wobei die Feldlinse (140) so zwischen der ersten abbildenden Linse (120) und der zweiten abbildenden Linse (130) angeordnet ist, dass eine senkrecht zur lateralen Ausdehnung des optischen Kanals (110) durch einen lateralen Mittelpunkt der Feldlinse (140) verlaufende Achse eine Symmetrieachse (170) des optischen Kanals (110) bildet; **dadurch gekennzeichnet, dass** die erste abbildende Linse (120) und die zweite abbildende Linse (130) jeweils zwei Blenden (250, 260) mit lokal variierender Transparenz umfassen;
wobei die zwei Blenden (250, 260) der ersten abbildenden Linse (120) lateral hintereinander zwischen der ersten Oberfläche (240) der ersten abbildenden Linse (120) und einer zweiten Oberfläche (210) der ersten abbildenden Linse (120) angeordnet sind; und
wobei die zwei Blenden (250, 260) der zweiten abbildenden Linse (130) lateral hintereinander zwischen der ersten Oberfläche (240) der zweiten abbildenden Linse (130) und einer zweiten Oberfläche (210) der zweiten abbildenden Linse (130) angeordnet sind.

2. Vorrichtung gemäß Anspruch 1, bei der der abzubildende Teil des Objekts sich in einer Objektebene (150) des optischen Kanals (110) befindet, und der Bereich des digitalen Bildsensors (430) auf den der Teil des Objekts abgebildet wird, sich in einer Bildebene (160) des optischen Kanals (110) befindet;
wobei eine Ausdehnung der Objektebene (150) des optischen Kanals (110) identisch zu einer Ausdehnung der Bildebene (160) des optischen Kanals (110) ist.

3. Vorrichtung gemäß Anspruch 1 oder 2, bei der eine der Feldlinse (140) zugewandte zweite Oberfläche (210) der ersten abbildenden Linse (120) und eine der Feldlinse (140) zugewandte zweite Oberfläche (210) der zweiten abbildenden Linse (130) als Achromaten ausgebildet sind, um Farblängsfehler zu reduzieren, und/oder asphärisch sind, um sphärische Aberrationen zu reduzieren.

4. Vorrichtung gemäß Anspruch 2 oder 3, bei der ein lateraler Abstand von der Objektebene (150) des optischen Kanals (110) zu einer Zwischenbildebene (190) des optischen Kanals (110) variabel ist und bei der ein lateraler Abstand von der Bildebene (160) des optischen Kanals (110) zu der Zwischenbildebene (190) des optischen Kanals (110) variabel ist; und
wobei die Zwischenbildebene (190) des optischen Kanals (110) parallel zur Objektebene (150) und parallel zur Bildebene (160) des optischen Kanals (110) durch den lateralen Mittelpunkt der Feldlinie (140) verläuft.

5. Vorrichtung gemäß Anspruch 4, mit mindestens einem Aktor, welcher ausgebildet ist, um den Abstand der ersten abbildenden Linse (120) zur Zwischenbildebene (190) und den Abstand der zweiten abbildenden Linse (130) zur Zwischenbildebene sowie den Abstand zwischen der zweiten abbildenden Linse (130) und der Bildebene (160) zu verändern, so dass eine Veränderung des Abstandes der Objektebene (150) zur Zwischenbildebene (190) zu einer gleichgerichteten Veränderung des Abstandes der Bildebene (160) zur Zwischenbildebene (190) führt und dabei der Abbildungsmaßstab des optischen Kanals (110) erhalten bleibt.

6. Vorrichtung gemäß einem der Ansprüche 1 bis 5, bei der die Feldlinse (140) eine Blende (370) umfasst,
wobei die Blende (370) im lateralen Mittelpunkt der Feldlinse (140) angeordnet ist, und die Symmetrieachse (170) des optischen Kanals (110) eine Symmetrieachse der Feldlinse (140) bildet.

7. Vorrichtung gemäß Anspruch 6, bei der die Blende (370) der Feldlinse (140), eine hexagonale Öffnung aufweist und als eine Aperturblende des optischen Kanals (110) ausgebildet ist.

8. Vorrichtung gemäß einem der Ansprüche 6 oder 7, bei der die Feldlinse (140) eine Mehrzahl von Blenden (360, 380) aufweist;
wobei eine erste Blende (360) aus der Mehrzahl von Blenden (360, 380) lateral vor der im lateralen Mittelpunkt der Feldlinse (140) angeordneten Blende (370) angeordnet ist;
wobei eine zweite Blende (380) aus der Mehrzahl von Blenden (360, 380) lateral hinter der im lateralen Mittelpunkt der Feldlinse (140) angeordneten Blende (370) angeordnet ist; und
wobei ein lateraler Abstand der ersten Blende (360) aus der Mehrzahl von Blenden (360, 380) zu der im lateralen Mittelpunkt der Feldlinse (140) angeordneten Blende (370) identisch zu einem lateralen Abstand der zweiten Blende (380) aus der Mehrzahl von Blenden (360, 380) zu der im lateralen Mittelpunkt der Feldlinse (140) angeordneten Blende (370) ist.

9. Vorrichtung gemäß einem der Ansprüche 2 bis 8, mit einem digitalen Bildsensor (430), welcher in der Bildebene (160) angeordnet ist.

10. Vorrichtung gemäß einem der Ansprüche 2 bis 9, mit mindestens einem Aktor, welcher ausgebildet ist, um den optischen Kanal (110) senkrecht zur lateralen Ausdehnung des optischen Kanals (110) zu bewegen, so dass sich der in der Objektebene (150) des optischen Kanals (110) befindende abzubildende Teil des Objektes variiert.

11. Vorrichtung gemäß einem der Ansprüche 1 bis 10, mit mindestens einem weiteren, dem ersten optischen Kanal (110) identischen optischen Kanal, wobei die optischen Kanäle (110) so in einer hexagonalen Verteilung angeordnet sind, dass sich Erfassungsbereiche der optischen Kanäle (110) teilweise überlappen.

12. Vorrichtung gemäß Anspruch 11, bei der die erste abbildende Linse (120) des ersten optischen Kanals (110) und eine erste abbildende Linse (120) des zumindest einem weiteren optischen Kanals auf einem ersten gemeinsamen Trägersubtrat angeordnet sind und ein Feld (120') erster abbildender Linsen (120) bilden;
wobei die zweite abbildende Linse (130) des ersten optischen Kanals (110) und eine zweite abbildende Linse (130) des zumindest einem weiteren optischen Kanals auf einem zweiten gemeinsamen Trägersubtrat angeordnet sind und ein Feld (130') zweiter abbildender Linsen (130) bilden; und
wobei die Feldlinse (140) des ersten optischen Kanals (110) und eine Feldlinse (140) des zumindest einem weiteren optischen Kanals auf einem dritten gemeinsamen Trägersubtrat angeordnet sind und ein Feld (140') von Feldlinsen (140) bilden.

## Claims

1. Device for optically imaging at least part of an object onto an area of a digital image sensor, comprising:
an optical channel (110) including a first imaging lens (120) arranged on a first substrate, a second imaging lens (130) arranged on a second substrate, and a field lens (140) arranged on a third substrate;
the first imaging lens (120) and the second imaging lens (130) being identical;
the first imaging lens (120) and the second imaging lens (130) being arranged such that a first surface (240) of the first imaging lens (120) is a light entry surface (180) of the optical channel (110) and that a first surface (240) of the second imaging lens (130) is a light exit surface (182) of the optical channel (110);
the field lens (140) being arranged between the first imaging lens (120) and the second imaging lens (130) such that an axis running perpendicularly to the lateral extension of the optical channel (110) and through a lateral center of the field lens (140) forms a symmetry axis (170) of the optical channel (110);
**characterized in that** the first imaging lens (120) and the second imaging lens (130) each include two diaphragms (250, 260) having locally varying transparencies;
the two diaphragms (250, 260) of the first imaging lens (120) being laterally arranged one behind the other between the first surface (240) of the first imaging lens (120) and a second surface (210) of the first imaging lens (120); and
the two diaphragms (250, 260) of the second imaging lens (130) being laterally arranged one behind the other between the first surface (240) of the second imaging lens (130) and a second surface (210) of the second imaging lens (130).

2. Device as claimed in claim 1, wherein that part of the object that is to be imaged is located within an object plane (150) of the optical channel (110), and wherein that area of the digital image sensor (430) to which said part of the object is imaged is located within an image plane (160) of the optical channel (110);
an extension of the object plane (150) of the optical channel (110) being identical with an extension of the image plane (160) of the optical channel (110).

3. Device as claimed in claim 1 or 2, wherein a second surface (210), facing the field lens (140), of the first imaging lens (120) and a second surface (210), facing the field lens (140), of the second imaging lens (130) are formed as achromats so as to reduce longitudinal chromatic flaws, and/or are aspherical so as to reduce spherical aberrations.

4. Device as claimed in claim 2 or 3, wherein a lateral distance of the object plane (150) of the optical channel (110) from an intermediate-image plane (190) of the optical channel (110) is variable, and wherein a lateral distance of the image plane (160) of the optical channel (110) from the intermediate-image plane (190) of the optical channel (110) is variable; and
the intermediate-image plane (190) of the optical channel (110) extending in parallel to the object plane (150) and in parallel to the image plane (160) of the optical channel (110) and through the lateral center of the field line (140).

5. Device as claimed in claim 4, comprising at least one actuator configured to vary the distance of the first imaging lens (120) from the intermediate-image plane (190) and the distance of the second imaging lens (130) from the intermediate-image plane as well as the distance between the second imaging lens (130) and the image plane (160) so that a change in the distance of the object plane (150) from the intermediate-image plane (190) results in a unidirectional change in the distance of the image plane (160) from the intermediate-image plane (190) while maintaining the imaging scale of the optical channel (110).

6. Device as claimed in any of claims 1 to 5, wherein the field lens (140) includes a diaphragm (370),
the diaphragm (370) being arranged at the lateral center of the field lens (140), and the symmetry axis (170) of the optical channel (110) forming a symmetry axis of the field lens (140).

7. Device as claimed in claim 6, wherein the diaphragm (370) of the field lens (140) comprises a hexagonal opening and is configured as an aperture diaphragm of the optical channel (110).

8. Device as claimed in one of claims 6 or 7, wherein the field lens (140) comprises a plurality of diaphragms (360, 380);
a first diaphragm (360) among the plurality of diaphragms (360, 380) being laterally arranged in front of the diaphragm (370) which is arranged at the lateral center of the field lens (140);
a second diaphragm (380) among the plurality of diaphragms (360, 380) being laterally arranged behind that diaphragm (370) which is arranged at the lateral center of the field lens (140); and
a lateral distance of the first diaphragm (360) among the plurality of diaphragms (360, 380) from that diaphragm (370) which is arranged at the lateral center of the field lens (140) being identical with a lateral distance of the second diaphragm (380) among the plurality of diaphragms (360, 380) from that diaphragm (370) which is arranged at the lateral center of the field lens (140).

9. Device as claimed in any of claims 2 to 8, comprising a digital image sensor (430) arranged within the image plane (160).

10. Device as claimed in any of claims 2 to 9, comprising at least one actuator configured to move the optical channel (110) perpendicularly to the lateral extension of the optical channel (110), so that that part of the object which is located within the object plane (150) of the optical channel (110) and is to be imaged will vary.

11. Device as claimed in any of claims 1 to 10, comprising at least one further optical channel identical with the first optical channel (110), the optical channels (110) being arranged in a hexagonal distribution such that detection areas of the optical channels (110) will partly overlap.

12. Device as claimed in claim 11, wherein the first imaging lens (120) of the first optical channel (110) and a first imaging lens (120) of the at least one further optical channel are arranged on a first shared carrier substrate and form a field (120') of first imaging lenses (120);
the second imaging lens (130) of the first optical channel (110) and a second imaging lens (130) of the at least one further optical channel being arranged on a second shared carrier substrate and forming a field (130') of second imaging lenses (130); and
the field lens (140) of the first optical channel (110) and a field lens (140) of the at least one further optical channel being arranged on a third shared carrier substrate and forming a field (140') of field lenses (140).

## Revendications

1. Dispositif de reproduction optique d'au moins une partie d'un objet sur une zone d'un capteur d'image numérique, avec:
un canal optique (110) comportant une première lentille de reproduction (120) disposée sur un premier substrat, une deuxième lentille de reproduction (130) disposée sur un deuxième substrat et une lentille de champ (140) disposée sur un troisième substrat;
dans lequel la première lentille de reproduction (120) et la deuxième lentille de reproduction (130) sont identiques;
dans lequel la première lentille de reproduction (120) et la deuxième lentille de reproduction (130) sont disposées de sorte qu'une première surface (240) de la première lentille de reproduction (120) soit une surface d'entrée de lumière (180) du canal optique (110), et qu'une première surface (240) de la deuxième lentille de reproduction (130) soit une surface de sortie de lumière (182) du canal optique (110);
dans lequel la lentille de champ (140) est disposée entre la première lentille de reproduction (120) et la deuxième lentille de reproduction (130), de sorte qu'un axe s'étendant perpendiculairement à l'extension latérale du canal optique (110) en passant par un centre latéral de la lentille de champ (140) forme un axe de symétrie (170) du canal optique (110);
**caractérisé par le fait que**
la première lentille de reproduction (120) et la deuxième lentille de reproduction (130) comportent, chacune, deux diaphragmes (250, 260) à transparence variant localement;
dans lequel les deux diaphragmes (250, 260) de la première lentille de reproduction (120) sont disposés latéralement l'un derrière l'autre entre la première surface (240) de la première lentille de reproduction (120) et une deuxième surface (210) de la première lentille de reproduction (120); et
dans lequel les deux diaphragmes (250, 260) de la deuxième lentille de reproduction (130) sont disposés latéralement l'un derrière l'autre entre la première surface (240) de la deuxième lentille de reproduction (130) et une deuxième surface (210) de la deuxième lentille de reproduction (130).

2. Dispositif selon la revendication 1, dans lequel la partie de l'objet à reproduire est située dans un plan d'objet (150) du canal optique (110), et la zone du capteur d'image numérique (430) sur laquelle est reproduite la partie de l'objet est située dans un plan d'image (160) du canal optique (110);
dans lequel une extension du plan d'objet (150) du canal optique (110) est identique à une extension de plan d'image (160) du canal optique (110).

3. Dispositif selon la revendication 1 ou 2, dans lequel une deuxième surface (210) de la première lentille de reproduction (120) orientée vers la lentille de champ (140) et une deuxième surface (210) de la deuxième lentille de reproduction (130) orientée vers la lentille de champ (140) sont réalisées sous forme d'achromats pour réduire l'aberration chromatique longitudinale et/ou sont asphériques pour réduire les aberrations sphériques.

4. Dispositif selon la revendication 2 ou 3, dans lequel une distance latérale du plan d'objet (150) du canal optique (110) à un plan d'image intermédiaire (190) du canal optique (110) est variable et dans lequel une distance latérale du plan d'image (160) du canal optique (110) au plan d'image intermédiaire (190) du canal optique (110) est variable; et
dans lequel le plan d'image intermédiaire (190) du canal optique (110) s'étend parallèlement au plan d'objet (150) et parallèlement au plan d'image (160) du canal optique (110) en passant par le centre latéral de la lentille de champ (140).

5. Dispositif selon la revendication 4, avec au moins un actionneur qui est conçu pour faire varier la distance entre la première lentille de reproduction (120) et le plan d'image intermédiaire (190) et la distance entre la deuxième lentille de reproduction (130) et le plan d'image intermédiaire, ainsi que la distance entre la deuxième lentille de reproduction (130) et le plan d'image (160), de sorte qu'une variation de la distance entre le plan d'objet (150) et le plan d'image intermédiaire (190) conduise à une variation analogue de la distance entre le plan d'image (160) et le plan d'image intermédiaire (190) et que la mesure de reproduction du canal optique (110) soit ainsi maintenue.

6. Dispositif selon l'une des revendications 1 à 5, dans lequel la lentille de champ (140) comporte un diaphragme (370),
dans lequel le diaphragme (370) est disposé au centre latéral de la lentille de champ (140), et l'axe de symétrie (170) du canal optique (110) forme un axe de symétrie de la lentille de champ (140).

7. Dispositif selon la revendication 6, dans lequel le diaphragme (370) de la lentille de champ (140) présente une ouverture hexagonale et est réalisé comme diaphragme d'ouverture du canal optique (110).

8. Dispositif selon l'une des revendications 6 ou 7, dans lequel la lentille de champ (140) présente une pluralité de diaphragmes (360, 380);
dans lequel un premier diaphragme (360) de la pluralité de diaphragmes (360, 380) est disposé latéralement devant le diaphragme (370) disposé au centre latéral de la lentille de champ (140);
dans lequel un deuxième diaphragme (380) de la pluralité de diaphragmes (360, 380) est disposé latéralement derrière le diaphragme (370) disposé au centre latéral de la lentille de champ (140); et
dans lequel une distance latérale entre le premier diaphragme (360) parmi la pluralité de diaphragmes (360, 380) et le diaphragme (370) disposé au centre latéral de la lentille de champ (140) est identique à une distance latérale entre le deuxième diaphragme (380) parmi la pluralité de diaphragmes (360, 380) et le diaphragme (370) disposé au centre latéral de la lentille de champ (140).

9. Dispositif selon l'une des revendications 2 à 8, avec un capteur d'image numérique (430) qui est disposé dans le plan d'image (160).

10. Dispositif selon l'une des revendications 2 à 9, avec au moins un actionneur qui est réalisé pour déplacer le canal optique (110) perpendiculairement à l'extension latérale du canal optique (110), de sorte que varie la partie de l'objet à reproduire située dans le plan d'objet (150) du canal optique (110).

11. Dispositif selon l'une des revendications 1 à 10, avec au moins un autre canal optique identique au premier canal optique (110), dans lequel les canaux optiques (110) sont disposés selon une distribution hexagonale de sorte que des régions de détection des canaux optiques (110) se recouvrent partiellement.

12. Dispositif selon la revendication 11, dans lequel la première lentille de reproduction (120) du premier canal optique (110) et une première lentille de reproduction (120) de l'au moins un autre canal optique sont disposées sur un premier substrat de support commun et forment un champ (120') de premières lentilles de reproduction (120);
dans lequel la deuxième lentille de reproduction (130) du premier canal optique (110) et une deuxième lentille de reproduction (130) de l'au moins un autre canal optique sont disposées sur un deuxième substrat de support commun et forment un champ (130') de deuxièmes lentilles de reproduction (130); et
dans lequel la lentille de champ (140) du premier canal optique (110) et une lentille de champ (140) de l'au moins un autre canal optique sont disposées sur un troisième substrat de support commun et forment un champ (140') de lentilles de champ (140).
